# EUROPEAN PATENT APPLICATION

(11) **EP 2 369 546 A1**
(43) Date of publication of application: **28.09.2011**
(21) Application number: 10155022.6
(22) Date of filing: 01.03.2010
(51) Int. Cl.: G06Q 30/00, G06Q 20/00

(54) **System and method for providing electronic coupons**

(71) Applicant: Coupies GmbH, 50823 Köln (DE)
(72) Inventor: Gillen, Felix, 50739, Köln (DE); Schul, Felix, 50677, Köln (DE); Schleimer, Frank, 50937, Köln (DE)
(74) Representative: Charles, Glyndwr

(57) **Abstract**

The invention provides a system (1) and a method for providing at least one electronic coupon (EC) to a user (3) of a mobile device (2) for goods or services, wherein said electronic coupon (EC) is transmitted by an electronic coupon server (6) to said mobile device (2) depending on a current position of said mobile device (2) and locations of point of sale (POS) of registered suppliers offering said goods and services, wherein the current position of the mobile device (2) is detected by an application executed by a computation unit (2B) of the mobile device (2).

## Description

The invention relates to a system and a method for providing electronic coupons to users via a mobile device of the respective user.

The distribution of electronic coupons by means of cellular handheld telephones is for instance described in US 2009/0070207 A1. A server computing device comprises a server module which responds to coupon requests from a mobile device. The server module transmits a plurality of text-based and image based electronic coupons to a client module. A coupon or display module displays the electronic coupons on a display of the mobile device. The system for providing electronic coupons as described in US 2009/0070207 A1 has as a drawback that it does not take into account the position of the user and the location of the suppliers which provide goods and services to the users and which accept such electronic coupons. Accordingly users receive in such a conventional system a plurality of electronic coupons which they in many cases cannot redeem at a point of sales (POS) because the user has no information where he can redeem the respective electronic coupon. Moreover the electronic coupons might only be convertible at points of sales (POS) which are out of reach of the respective user.

In US 2002/0065713 A1 a coupon delivery via a mobile phone based on the location of the mobile phone is proposed. In this conventional system a database of merchants offering coupons is provided wherein the database can be remotely accessed by users using a mobile device such as a mobile phone. If the users wishes to find out about coupons offered in the vicinity of their present location they can use their mobile phone to dial-up the database of merchant coupons and a server determines the location of merchants within the vicinity of the user and transmits electronic coupons to the user based on the user's location and selected preferences of the user. Suppliers within a predefined radius of the current position of the mobile device are selected from the database and coupons redeemable with the selected merchants are then transmitted to the user which can download electronic coupons as WML files (Wireless Markup Language) using a wireless application protocol WAP. The electronic coupon can contain information data about how to redeem the coupons and can contain information about a merchant or a point of sale (POS) where the respective electronic coupon can be redeemed.

In this conventional coupon delivery system according to the state of the art as described in US 2002/00657613 A1 the user requests mobile electronic coupons via a WAP link and receives electronic coupons in form of a list. In this conventional system the coupon distribution is performed as a service of the mobile phone provider who performs the localization of the respective user and provides the user with electronic coupons according to the user preferences.

A disadvantage of the coupon delivery system as described in US 2002/0065713 A1 is that the coupon delivery service is offered by the mobile phone provider and not implemented as a provider independent application of the mobile device.

A further drawback of the coupon delivery system described in US 2002/0065713 A1 resides in the fact that the localization of the user is done by the mobile phone provider making it transparent where a user is performing his transactions thus giving a complete transaction profile of the user, i. e. indicating where and what a user is buying at what locations at any time. Naturally such data contains sensitive personal data which a user might wish to keep secret. Further such a coupon delivery system is open to attacks and manipulations by third parties.

Furthermore, the conventional coupon delivery systems according to the state of the art do not allow for an efficient clearing process between an electronic coupon distributor and the plurality of point of sales POS. Clearing is the compensation between manufacturers and retailers, which is necessary in many cases where retailers initiate a couponing campaign.

Accordingly it is an object of the present invention to provide a system and a method for providing electronic coupons to users allowing to provide the users efficiently with electronic coupons and not making their transaction profiles transparent to third parties.

The present invention provides a system for providing at least one electronic coupon EC to a user of a mobile device for goods and services,
wherein said electronic coupon is transmitted by an electronic coupon server (EC-S) to said mobile device depending on the position of said mobile device and locations of point of sales POS of registered suppliers offering said goods and services,
wherein the position of the mobile device is detected by an application executed by a processing unit of the mobile device.

In a possible embodiment a clearing code (CC) for clearing the electronic coupon EC is transmitted by the electronic coupon server to the mobile device, wherein said clearing code is used for performing a clearing between the point of sales of the registered suppliers and at least one electronic coupon distributor.

In a possible embodiment of the system according to the present invention a redeeming code PC for redeeming the electronic coupon EC at a point of sale POS of a registered supplier is transmitted by the electronic coupon server EC-S to the mobile device of the user.

In a possible embodiment the electronic coupon EC is transmitted by the electronic coupon server EC-S to the mobile device upon a request has been received by the electronic coupon server EC-S from the mobile device (pull mode).

In an alternative embodiment the electronic coupon EC is transmitted by the electronic coupon server EC-S to the mobile device when the mobile device enters a region or area where a point of sale POS of a registered supplier is located (push mode).

In a possible embodiment the mobile device detects its current position on the basis of a navigation data provided by a navigation system. This navigation system can for instance comprise a GPS unit.

In the electronic coupon distribution system according to the present invention the current position of the mobile device is detected by an application program executed by a processing or computation unit of the mobile device independently from the mobile service provider so that the user does not have to disclose personal sensitive data such as his user profile or transaction profile to third parties such as the service provider. Accordingly the electronic coupon distribution system according to the present invention provides privacy and secrecy and is more resistant against manipulations than conventional electronic coupon distribution systems.

A further advantage of the system for providing electronic coupons according to the present invention is that it is independent from the mobile service provider so that a user can change his mobile service supplier without any negative impact to the electronic coupon distribution service provided by the system according to the present invention.

In a possible embodiment the clearing code CC transmitted by the electronic coupon server to the mobile device comprises an automatic clearing code ACC such as a bar code readable by a scanning device at the respective point of sale POS. The system of the present invention increases data security and reliability. The system is not only more flexible for users but also for suppliers because the suppliers can participate in the distribution scheme without the need to provide an electronic equipment at the point of sales (POS) such as a bar code reader.

In an alternative embodiment the clearing code CC transmitted by the electronic coupon server to the mobile device is a manual clearing code MCC which can consist of a short sequence of numbers or characters.

This manual clearing code MCC can be displayed on a display of the mobile device and copied at the point of sale POS on a form or paper and sent by normal mail to a clearing house or to the electronic coupon distributor for clearing and verification.

This embodiment has the advantage that at the point of sales POS no electronic infrastructure is necessary for a merchant or supplier to participate in the electronic coupon distribution system according to the present invention.

In a possible embodiment of the system according to the present invention the clearing code CC is forwarded by the point of sale of the registered supplier to an electronic coupon distributor or clearing house, which perform a clearing on the basis of the received clearing codes and on the basis of a list of distributed and redeemed electronic coupons provided by the electronic coupon server.

In a possible embodiment of the system according to the present invention the electronic coupon server comprises an electronic coupon database storing electronic coupons and comprising a point of sale database for storing locations of registered suppliers offering goods or services to users at one or different point of sales POS.

In a possible embodiment of the system according to the present invention the point of sale database of the electronic coupon server indicates a clearing type of the registered suppliers wherein the clearing type can comprise an automatic clearing type and a manual clearing type.

In this embodiment it is possible to provide a registered supplier with a clearing code which fits to the infrastructure of the respective supplier. For example, in a point of sale POS where the registered supplier has a bar code scanner the clearing code CC provided by the electronic coupon server can include a bar code to be scanned at the point of sale whereas for a registered supplier not having such a scanner a short sequence of characters and numbers are transmitted to the mobile device of the user to be displayed on a display of the mobile device wherein this short sequence of characters and numbers can be copied by hand at the point of sale POS of the registered supplier on a paper and sent to the clearing house or coupon distributor by normal mail. Therefore owners of small shops without any scanner or participants of a franchising system can participate in the system according to the present invention. Moreover even mobile merchants not having a telecommunication connection can take part such as an e.g. ice cream seller on a beach.

The invention further provides a mobile device of a user comprising
an interface for receiving upon request or when entering a predetermined area at least one electronic coupon EC for goods or services from an electronic coupon server depending on the current position of the mobile device and depending on locations of registered suppliers offering the goods and services, wherein the current position of the mobile device is detected by detection unit of the mobile device on the basis of navigation data.

In a possible embodiment a navigation unit providing the navigation data is integrated in the mobile device.

In an alternative embodiment the navigation unit is connected to the mobile device via a further interface of the mobile device.

In a possible embodiment the navigation unit is formed by a navigation system of a vehicle.

In a possible embodiment the navigation unit of the mobile device comprises a GPS (Global Positioning System) unit for detecting the current position of the mobile device.

In a possible embodiment of the mobile device according to the present invention the mobile device comprises a display for displaying an electronic coupon EC and a location of at least one point of sale of a registered supplier where the respective electronic coupon EC can be redeemed by the user of the mobile device.

In a possible embodiment of the mobile device according to the present invention the mobile device receives a clearing code CC from the electronic coupon server EC-S for clearing the received electronic coupon EC which is provided to the point of sale (POS) to perform a clearing with the electronic coupon distributor EC-D or with a clearing house CH of the electronic coupon distributor.

In a possible embodiment the mobile device receives the clearing code CC from the electronic coupon server EC-S depending on the current position of the mobile device and a location of the point of sales (POS) of registered supplier when the electronic coupon server EC-S receives a corresponding request for redeeming the electronic coupon at the respective point of sale (POS) from the mobile device or from a redeeming device provided at the respective point of sale (POS).

In a possible embodiment the mobile device receives a clearing code (CC) and a separate redeeming code for redeeming the received electronic coupon EC at the respective registered supplier (POS).

In an alternative embodiment the mobile device MD receives a common clearing and redeeming code for clearing and redeeming the received electronic coupon EC.

In a possible embodiment the mobile device receives the clearing and/or redeeming code only if the actual position of the mobile device matches the position of the point of sale (POS) of the registered supplier when the electronic coupon server EC-S receives a redemption coupon request from the respective mobile device for redeeming the electronic coupon EC at the respective point of sale POS of the registered supplier.

In this embodiment the electronic coupon server EC-S can monitor whether the user of the mobile device is actually at the location of the respective point of sale of the registered supplier when redeeming the provided electronic coupon EC. In this embodiment a user of a mobile device can only redeem an electronic coupon EC if he is really at the location of the point of sale (POS) of the registered supplier.

In a possible embodiment of the mobile device according to the present invention the mobile device comprises a display for displaying the electronic coupons ECs and the locations of the corresponding point of sale (POS) of registered suppliers where the respective electronic coupons ECs can be redeemed by the user of the mobile device.

In a possible embodiment not only the location of the respective suppliers are displayed to the user on the display of the mobile device but also a travelling route and transport means for reaching the point of sale of the registered supplier can be displayed. Furthermore it is possible that the user can get audio instructions how to reach the respective point of sale of the registered supplier.

In a possible embodiment of the mobile device according to the present invention the clearing code displayed to the user can comprise an automatic clearing code (ACC) such as a bar code and/or a manual clearing code (MCC) formed by a short sequence of characters or numbers or by a combination of characters and numbers.

In a possible embodiment of the mobile device according to the present invention the mobile device is formed by a mobile phone.

In alternative embodiments the mobile device can be formed by a laptop, a PDA palm top or any other type of wireless communication device. In a possible embodiment the mobile device according to the present invention can be plugged into a navigation system of a car or vehicle comprising a navigation device with a GPS unit.

In a possible embodiment the mobile device according to the present invention comprises a graphical user interface GUI with a touchscreen for selecting point of sales POS within the vicinity of the mobile device displayed to the user and for selecting electronic coupons of the respective point of sales.

In the following possible embodiments of the system and method for providing electronic coupons ECs to users are described with reference to the enclosed figures.
- Fig. 1: shows a block diagram for illustrating a possible embodiment for a system for providing electronic coupons to a user of a mobile device according to the present invention;
- Fig. 2: shows a further block diagram for illustrating a further embodiment of a system for providing electronic coupons to a user of a mobile device according to the present invention;
- Fig. 3: shows a signal diagram for illustrating possible embodiments of the system and method for providing electronic coupons to a user of a mobile device according to the present invention;
- Fig. 4: shows a flowchart of a possible embodiment of an application executed by a mobile device according to the present invention;
- Fig. 5A, 5B, 5C: show examples or information data displayed on a display of a mobile device according to an embodiment of the present invention.

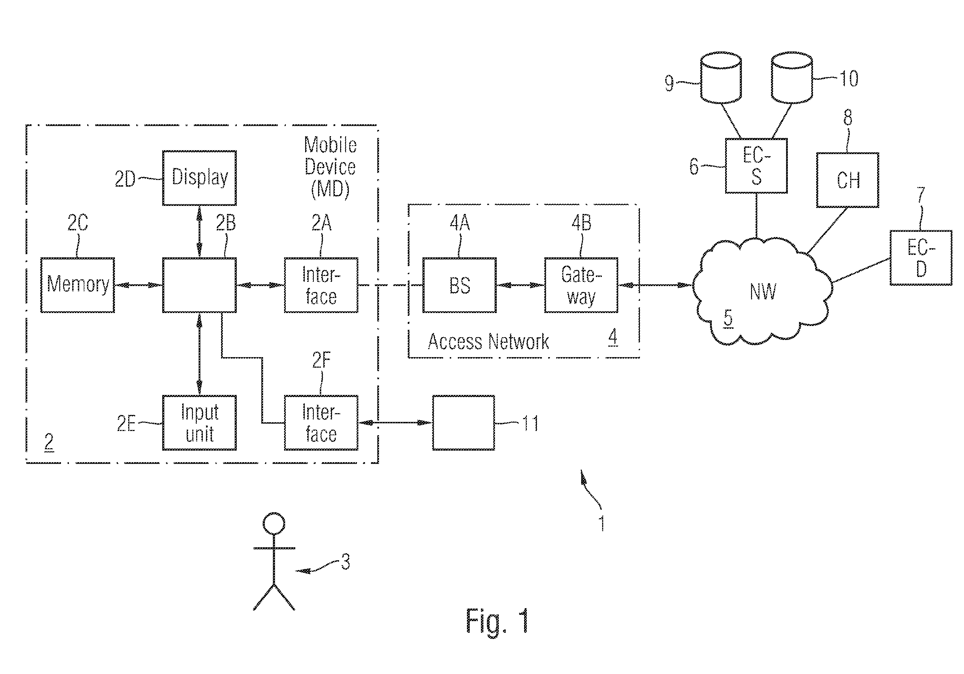

As can be seen from Fig. 1 the system 1 for providing electronic coupons ECs to users 3 having mobile devices 2 comprises at least one mobile device 2 of a user 3 which can be connected via an access network 4 and a further backbone network 5 to an electronic coupon server 6. The mobile device 2 can be any mobile wireless device such as a mobile phone or a laptop. The mobile device 2 comprises an interface 2A for establishing a wireless link for example to a base station 4A of the access network 4 as shown in Fig. 1. The mobile device 2 further comprises a computation unit 2B for executing application programs. The computation unit 2B can comprise one or several microprocessors. The mobile device 2 further comprises a data memory 2C for storing data. Furthermore, the mobile device 2 comprises a display 2D and an input unit 2E for inputting data by the user 3. The input unit 2 can be formed by a keyboard to input data by the user into the mobile device 2. The display 2D and the input unit 2E can be formed by a graphical user interface GUI comprising a touchscreen. The mobile device 2 can be a Smartphone, a mobile phone, a laptop or any kind of wireless mobile device. In the embodiment shown in Fig. 1 the mobile device 2 comprises a wireless link to a base station 4A of an access network 4. This access network 4 is connected via a gateway 4B to a backbone network 5. To the network 5 at least one electronic coupon server 6 is connected. Furthermore in a possible embodiment a server 7 of an electronic coupon distributor EC-D and a server 8 of a clearing house CH is connected to the network 5.

The mobile device 2 shown in Fig. 1 can be a handheld device of the user 3. In a possible embodiment the mobile device 2 can be connected via a further interface to a navigation apparatus or navigation system provided within a vehicle such as a car. In the system 1 according to the present invention an electronic coupon EC is transmitted by the electronic coupon server 6 to the mobile device 2 depending on the current position of the mobile device 2 and depending on locations of point of sale (POS) of registered suppliers offering goods and services which can be redeemed by the user 3 with the received electronic coupon EC. In a possible embodiment the electronic coupon server 6 has access to an electronic coupon database 9 and a point of sale database 10. The electronic coupon database 9 stores electronic coupons ECs for goods and services. The point of sale (POS) database 10 stores locations of point of sales (POS) of registered suppliers offering these goods or services or responding electronic coupons. The point of sale database 10 can store a name of a registered supplier, the locations of all point of sales of the registered supplier or merchant and additional data such as opening times of shops (POS) and a clearing address of the registered supplier.

In a possible embodiment the user 3 carrying his mobile device 2 with him can send a request for receiving electronic coupons ECs from the electronic coupon server 6 when moving or travelling through an area such as a city or a shopping mall. This request for receiving electronic coupons is forwarded to the electronic coupon server 6 along with the current position of the mobile device 2. In the system 1 according to the present invention the current position of the mobile device 2 is calculated by an application program executed by the computation unit 2B of the mobile device 2 on the basis of a navigation data. This navigation data can be stored in a possible embodiment in the local memory 2C of the mobile device 2. In an alternative embodiment the navigation data is provided to the mobile device 2 via an interface from a database or from a navigation system of the user 3. In a possible embodiment the current position of the mobile device 2 is provided to the mobile device 2 by a navigation system of the user 3, e.g. by a navigation system of a vehicle used by the user 3. In a possible embodiment the mobile device 2 of the user 3 is pluggable into a navigation system of a car of the user 3. In a possible embodiment the current position of the user 3 is calculated when the mobile device 2 is deplugged from the navigation system of the car. The detection of the current position of the mobile device 2 can be performed in real time.

In a further embodiment the mobile device 2 comprises a GPS unit for detecting its current position. Along with the request for receiving electronic coupons the current position of the mobile device 2 can be transferred to the electronic coupon server 6 which compares the current position of the mobile device 2 with the location data of the registered suppliers stored in the point of sale database 10. The electronic coupon server 6 selects one or several point of sales POS of the registered suppliers located within the vicinity of the mobile device 2, for instance within a predetermined radius or range of the mobile device 2. For example, the electronic coupon server 6 selects all point of sales POS accepting electronic coupons ECs within a range of 1 km of the mobile device 2. In the system 1 according to the present invention the determination of the current position of the mobile device 2 is performed by an application program run on the computation unit 2B of the mobile device 2 independently of the provider of the access network 4 as shown in Fig. 1. In a possible embodiment this application program can be downloaded from the electronic coupon server 6 for instance from a homepage. The selection of the registered suppliers is done by the electronic coupon server 6 primarily depending on the relative position between the mobile device 2 and the locations of the registered suppliers and their point of sales POS as stored in the database 10. In a possible embodiment the selection can be performed on the basis of further criteria such as preferences transmitted by the user 3 of the mobile device 2 along with the request indicating preferred goods and services, for example specific trademarks or sizes such as shoe sizes. In a further embodiment personal data of the user 3 can also be used as a selection criteria for the electronic coupons EC provided by the electronic coupon server 6 to the mobile device 2. For example, a user 3 will not receive electronic coupons ECs for liquor if the age of the user 3 is less than 18 even if the user 3 indicates as a preference to receive electronic coupons ECs for liquor. In this example the coupon request of the use 3 will be denied and possibly an explanation is indicated on the display of the mobile device 2 such as "Your request has been denied because you have not yet reached adult age.".

In a possible embodiment the electronic coupon server 6 does not only transmit the electronic coupons ECs according to searching the request but also indicates the location of the respective point of sales (POS) on even a travel route how to get to the respective point of sales (POS). In a possible embodiment the travel route to reach the respective point of sale (POS) is forwarded by the mobile device 2 to a navigation system of the user 3 via an interface. The navigation system which can be provided in a car of the user will then automatically guide the user 3 to the respective point of sale POS where he can redeem the transmitted electronic coupon (EC). Fig. 1 shows a second interface 2F forming an interface between the mobile device 2 and a navigation system 11 which can be provided within a vehicle or car of the user 3.

In a possible embodiment of the system 1 according to the present invention the electronic coupon is transmitted upon a request received by the electronic coupon server 6 in a pull operation mode.

In an alternative embodiment the electronic coupons ECs are transmitted by the electronic coupon server in a push operation mode without receiving a request by the user whenever the user 3 carries his mobile device 2 in the vicinity of a registered supplier having a point of sale POS for offering goods and services and redeeming corresponding electronic coupons (EC).

In a possible embodiment the user 3 can switch his mobile device 2 within these two operation modes, i. e. between a push operation mode and a pull operation mode by inputting a corresponding command in the keyboard 2E.

In a possible embodiment of the system 1 according to the present invention the electronic coupon server 6 does not only transmit an electronic coupon EC to the mobile device 2 but also a clearing code CC which can be used for performing a clearing between the registered supplier and the electronic coupon distributor EC-D or a clearing house CH of the electronic coupon distributor EC-D after the electronic coupon EC has been redeemed by the user 3 at the point of sale POS.

In a possible embodiment the clearing code (CC) can be used by the user 3 for redeeming the respective electronic coupon EC. In a possible embodiment the electronic coupon server 6 provides the user 3 of the mobile device 2 with a clearing code (CC) and a separate redeeming code for redeeming the electronic coupon EC.

In a possible embodiment the clearing code (CC) provided by the electronic coupon server 6 is displayed on the display 2D of the mobile device 2 to the user 3. In a possible embodiment the clearing codes (CC) is formed by an automatic clearing code (ACC) for example by a bar code. In an alternative embodiment the clearing code (CC) can be formed by a manual clearing code (MCC) comprising a comparatively short sequence of numbers and/or characters. In a possible embodiment the point of sale database 10 indicates whether the respective point of sale POS where the transmitted electronic coupon EC is to be redeemed comprises the necessary infrastructure or apparatuses to read an automatic clearing code (ACC) such as a bar code or not. In this embodiment it can be stored in the database 10 whether the respective point of sale POS requires an automatic clearing code (ACC) or a manual clearing code (MCC). The electronic coupon server 6 checks in this embodiment whether the respective point of sale POS has the infrastructure to read an automatic clearing code ACC such as a scannable bar code or not. If the point of sale POS of the registered supplier comprises a corresponding scanner the electronic coupon server 6 transmits an automatic clearing code ACC to the mobile device 2 of the user 3 otherwise the electronic coupon server 6 transmits a manual clearing code MCC to the mobile device 2 of the user for performing the redemption of the electronic coupon EC. In a possible embodiment the user 3 can choose whether to receive a manual clearing code (MCC) or an automatic clearing code (ACC). For example the user 3 might wish to buy a product at a point of sale POS which does not have a bar code reader and switches the mobile device 2 to an operation mode to receive a manual clearing code (MCC) along with the electronic coupon EC for buying that product and to show after reception of the electronic coupon EC the received manual clearing (MCC) on the display 2D of his mobile device 2 to a vendor at the point of sale POS. The vendor at the point of sale POS can copy the displayed manual clearing code MCC formed by a sequence of characters such as "CYX1279" on a paper or form and send the form for example to the electronic coupon distributor EC-D running the server 7 as shown in Fig. 1. Another possibility is that the vendor at the point of sale (POS) of the registered supplier having accepted the electronic coupon EC forwards the copied manual clearing code MCC to a clearing house CH comprising the clearing house server 8 as shown in Fig. 1 for performing the necessary clearing of the electronic coupon EC. The provision of a manual clearing code MCC has the advantage that no electronic infrastructure is necessary at the point of sale POS so that even smaller shops or participants of a franchise system can participate in the electronic coupon system 1 according to the present invention without the need to acquire or buy any electronic equipment.

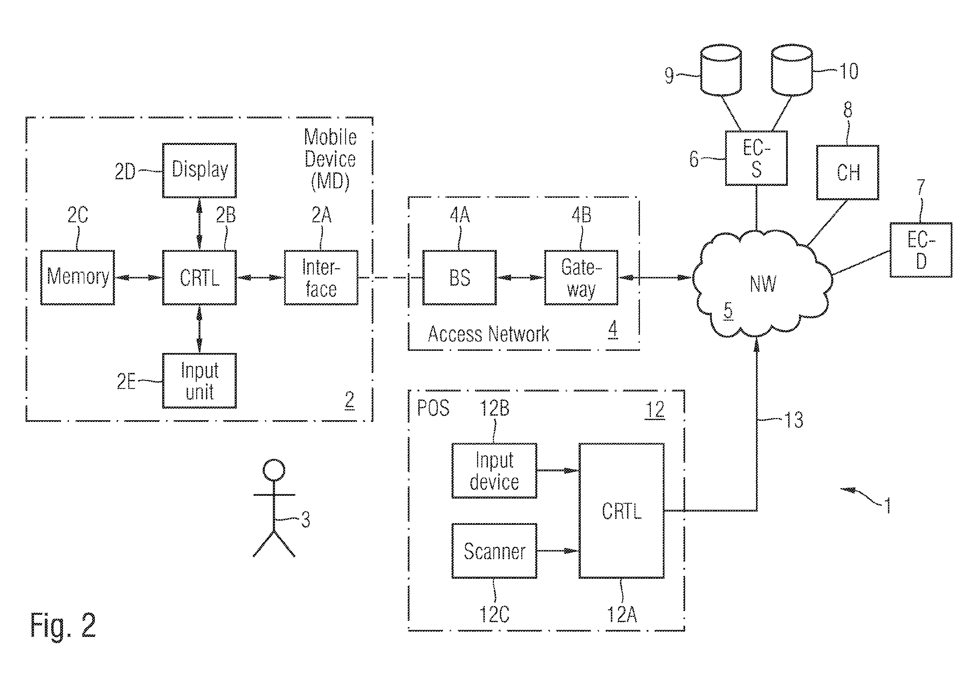

Fig. 2 shows a block diagram of a further exemplary embodiment of the system 1 for distribution of electronic coupons ECs according to the present invention. In this embodiment an electronic device 12 is provided at the respective point of sale POS of the registered supplier of goods and services participating in the distribution scheme. In the shown embodiment a computation unit 12A is connected to an input device 12B and to a scanner 12C. The computation unit 12A is connected via communication line 13 to the network 5 of the system 1. This communication line 13 can be formed by a telephone line connecting the device 12 to the backbone network 5 via a telephone system. After having received the electronic coupon (EC) the electronic coupon EC can be displayed on the display 2D of the mobile device 2. This electronic coupon can be provided with a corresponding redemption or clearing code (CC). If the transmitted clearing code (CC) is an automatic clear code (ACC) such as a bar code a person at the point of sale POS can scan this automatic clearing code ACC by use of the scanner 12C as shown in Fig. 2. If the automatic clearing code ACC consists of a sequence of characters and members, a person at the point of sale POS can input the sequence by use of the input device 12B which can be formed by a keyboard. The scanned or input clearing code (CC) is forwarded via the communication line 13 to the server 8 of the clearing house CH or to the server 7 of the electronic coupon distributor for EC-D performing a coupon clearing process.

In a possible embodiment the computation device 12A at the point of sale POS can perform a check whether the redeemed electronic coupon EC is valid or not. In a possible embodiment an electronic coupon EC transmitted by the electronic coupon server to a mobile device 2 of a user 3 is only valid for a predetermined period of time such as one day or a week. Further, the computation unit 12A of the device 12 can check whether the registered supplier actually accepts the displayed electronic coupon EC for the actual purchase of the product or service. In a possible embodiment the device 12 at the point of sale POS performs the redemption of the electronic coupon EC only after communication with the electronic coupon server 6. In this embodiment the device 12 transmits the displayed electronic coupon (EC) shown on the display 2D of the mobile device 2 and detected for example by a camera or scanner and sends an inquiry to the electronic coupon server 6 whether to redeem the electronic coupon EC or not. In this embodiment the electronic coupon server 6 can check the validity of the electronic coupon EC or can check the user profile of the user. Further embodiments are possible. As already explained the validation whether the displayed electronic coupon EC is valid can be either performed by the device 12 at the point of sale (POS) or by the electronic coupon server 6. Further it can be verified whether the person or user which has received the electronic coupon EC is really the holder and owner of the mobile device 2. Accordingly, the electronic coupon server 6 can perform in a possible embodiment a user authentification process whether the user 3 at the point of sale POS is really the entitled person. In a possible embodiment this can be performed by checking a pin number or a password input by the user 3 into the input device 12B as shown in Fig. 2. In a further embodiment other data can be used for authentification such as biometric data of the user 3. If the user 3 can not verify its identity the redemption of the electronic coupon will be denied by the electronic coupon server 6 and a corresponding notification will be sent by the electronic coupon server 6 via the network 5 and the communication line 13 to the device 12 at the point of sale (POS).

The electronic coupon EC provided by the electronic coupon server 6 to the user 3 can cover the costs of a good or service partially or completely. Accordingly, the user 3 will pay a part of a price of the respective goods or services or get the goods or services completely free without paying any money as indicated by the electronic coupon (EC) displayed on the display 2D of the mobile device 2.

In a possible embodiment the electronic coupons (EC) redeemed by the user 3 are recorded and a selection of electronic coupons ECs in the future is performed by the electronic coupon server 6 according to a stored coupon redemption history of the respective user 3.

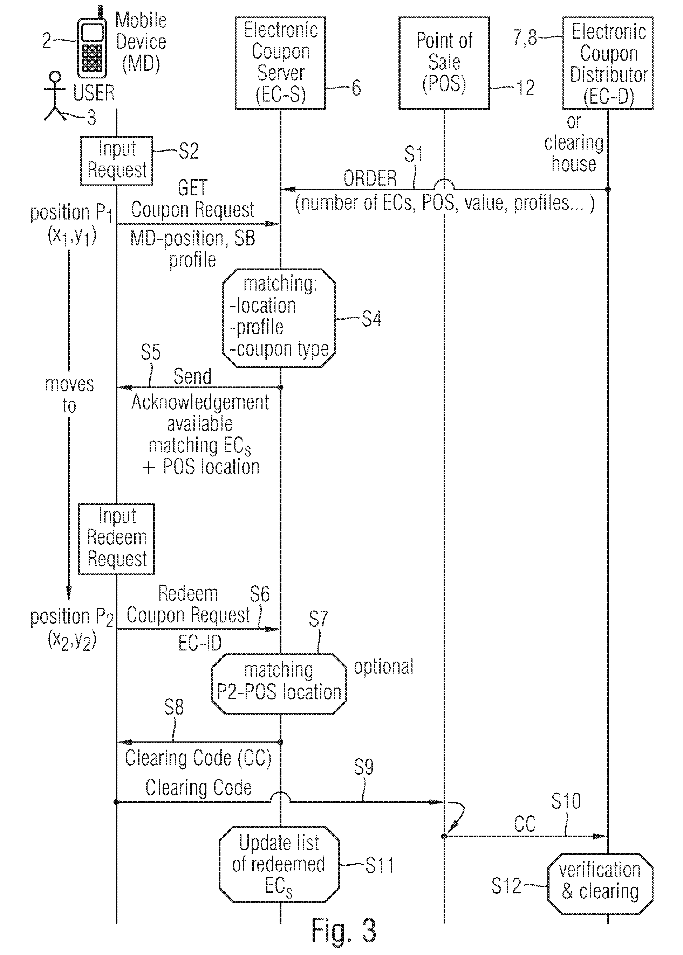

Fig. 3 shows a signal diagram for illustrating a possible embodiment of the method for distributing electronic coupons according to the present invention.

In this embodiment the electronic coupon server 6 first receives an order from an electronic coupon distributor 7 giving him a contingent of electronic coupons ECs for products and services to be sold at different point of sales POS. The order can comprise information about the point of sales (POS) of registered suppliers comprising addresses and coordination data indicating where the locations of the point of sales POS are. Further, the electronic coupon distributor EC-D can indicate profiles of desired clients or users such as age or preferences of the users.

After having received an electronic coupon distribution order in step S 1 the electronic coupon server 6 can store the corresponding data in a database. The electronic coupon server 6 waits for requests to be received from a mobile device 2 of a user 3 after an input by the user 3 in step S2 into the input unit 2E of his mobile device 2. In the embodiment shown in Fig. 3 the system operates in a pull mode, i. e. the user 3 generates the request for receiving an electronic coupon and transmits in step S3 a get electronic coupon request command to the electronic coupon server 6 along with his current position P1 (X1, Y1, Z1) detected by the application program run on the computation unit 2B of the mobile device 2. The electronic coupon server 6 performs in step S4 a matching process between the location of the registered suppliers of goods and services and their point of sales POS and the current position P1 of the user 3 of the mobile device 2. Further a matching concerning the user profile and the coupon type can be performed as well in step S4. If a match is found by the electronic coupon server 6 the coupon server 6 sends an acknowledgement signal to the mobile device 2 and can send directly available matching electronic coupons ECs to be displayed in the display 2D of the mobile device 2 in step S5. Furthermore, the electronic coupon server 6 can send locations of possible point of sales POS in step S5 and even a possible travel route from the current position P1 of the user 3 to one or several point of sales POS where he can redeem the respective electronic coupons ECs. After having received the electronic coupons ECs the user 3 can decide whether to travel or move to the indicated point of sales of registered suppliers. After the user 3 has reached the location of the registered supplier at the respective point of sale POS he can send an input redeem request in step S6 to the electronic coupon server 6 comprising for example an identification number (ID) of the respective electronic coupon (EC-ID). In an optional step the electronic coupon server 6 can match the actual position P2 (X2, Y2, Z2) of the user 3 with the location or coordinates of the point of sale in step S7. In a possible embodiment no location matching is performed in S7. After having received the redeemed coupon request in step S6 the electronic coupon server 6 can transmit in step S8 a clearing code CC to the mobile device 2 which can be displayed on a display 2D of the mobile device 2. In a possible embodiment the clearing code CC is an automatic clearing code ACC such as a bar code. In an alternative embodiment the clearing code CC is a manual clearing code MCC. In a possible embodiment the electronic coupon server 6 checks the infrastructure of the point of sale POS first and sends then either a manual clearing code MCC or an automatic clearing code ACC to the mobile device 2 of the user 3 at the point of sale POS. The received clearing code (CC) is provided in step S9 by the mobile device 2 to the point of sale device 12 for instance by scanning the displayed automatic clearing code ACC. In an alternative embodiment the clearing code CC is typed into an input device 12B at the point of sales POS. In a still further embodiment a manual clearing code (MCC) is written on a paper by a vendor at the point of sale POS. As shown in Fig. 3 the clearing code (CC) is forwarded in step S10 by the point of sale 12 via the communication line 13 and the backbone network 5 to the clearing house server 8 or directly to the electronic coupon distributor server 7 for performing a clearing process.

In a possible embodiment the electronic coupon server 6 can update a stored list of redeemed electronic coupons in step S 11. A verification and clearing process of the redeemed electronic coupons is performed by the coupon distributor or clearing house in step S12 as shown in Fig. 3.

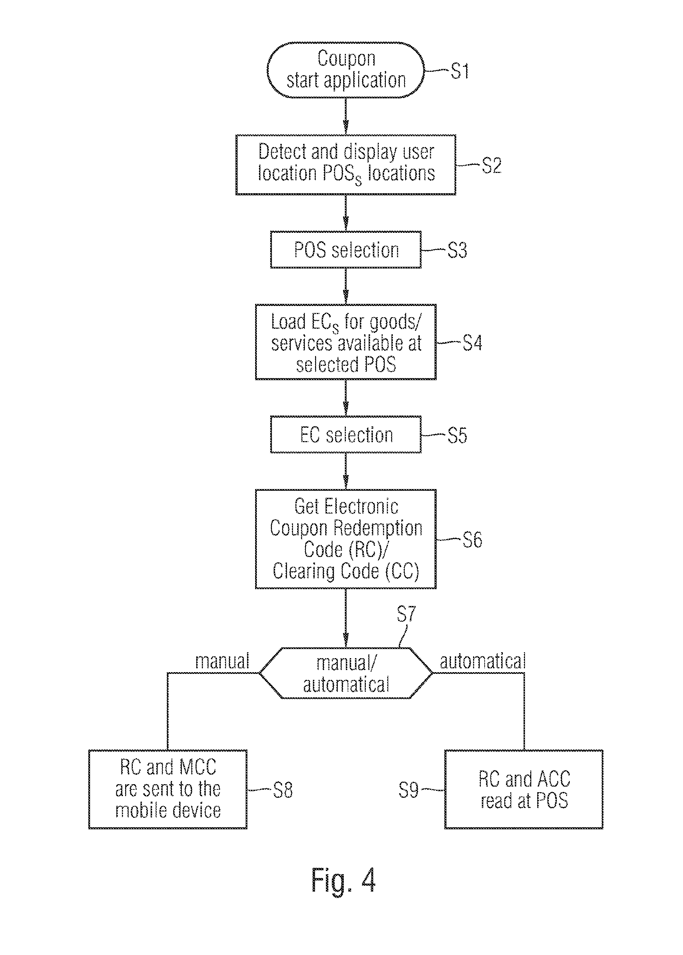

Fig. 4 shows a flowchart of a possible embodiment of an application executed on a mobile device 2.

In a step S0 the electronic coupon application ECA is initiated. The mobile device 2 detects its current position in step S2 and displays the current position of the mobile device of the user 3 as well as the locations of possible point of sales in step S2. In this example the mobile device 2 works in a push mode and receives locations of possible points-of-sales POS without sending a request to the electronic coupon server 6.

In a further step S3 the user 3 selects a fitting point of sale POS which is located in his vicinity. The user loads then in step S4 electronic coupons ECs for goods and services which are available at selected point of sale. In an alternative embodiment the user 3 selects not the point of sales POS but first goods and services which he is interested in and then receives proposals for point of sales POS in his vicinity which provide the corresponding goods and services. After having received the electronic coupons ECs from the electronic coupon server 6 the user 3 can perform in step S5 an electronic coupon selection of electronic coupons ECs displayed on the display 2D of his mobile device 2. The selection can be performed manually or automatically depending on preset selection criteria set e.g. in a selection filter.

In a further step S6 the user 3 can request to receive a redemption code (RC) and/or a clearing code (CC) for redeeming the received and selected electronic coupons ECs at the point of sale POS. In a possible embodiment the user 3 can ask a vendor at the point of sale POS whether an automatic clearing code ACC such as a bar code or a manual clearing code (MCC) is requested or desired in step S7. If the point of sale POS can only use a manual clearing code MCC a redemption code (RC) and a manual clearing code MCC are sent to the mobile device 2 in step S8 and displayed on the display 2D. The manual clearing code MCC can then be copied on a paper or form and sent by the vendor at the point of sale POS by normal mail to the clearing house CH or to the electronic coupon distributor EC-D for further processing.

In a possible embodiment each redeeming of an electronic coupon EC by a user at a point of sale POS is registered by a server, e.g. the electronic coupon server 6. In this embodiment the mobile device 2 of the user transmits at the moment when the electronic coupon EC is redeemed at the point of sale POS a signal which indicates that at redemption of the electronic coupon EC has taken place or is requested. In the preferred embodiment the time, location of the redemption process an identifier of the redeemed electronic coupon EC as well as the user consumer which has redeemed the electronic coupon EC is stored on a database of the electronic coupon server 6.

In a preferred embodiment the electronic coupon server 6 further calculates on the basis of the data stored in the database whether the redemption of the electronic coupon EC was valid or not. Accordingly, in this embodiment it is possible to separate valid redemptions of electronic coupons EC from invalid redemptions. Detection of an invalid redemption of an electronic coupon EC can for example be performed on the basis of the location and time of the redeeming process. For example, if the user at the time of the asserted electronic coupon redemption process is not at the location of a registered point of sale POS it can be assumed that the redemption is invalid. Furthermore, if too many redemptions take place in a very short time at different locations which a user can not reach in the given time a manipulation seems likely and the redemption of the electronic coupons EC is deemed to be invalid. Accordingly, the information data concerning the time and location of the redemption of the electronic coupon EC provides a second information channel for the electronic coupon distributor to check whether the electronic coupons ECs have been redeemed in an admissible way. The information transmitted by the mobile device 2 of the user at the moment of redeeming the electronic coupon EC can also be used by the clearing house for a clearing process. For example, the clearing house CH can compare automatically the transmitted information data of the stores or point of sales POS with the server data to provide additional security against manipulations by third parties. Each redemption of an electronic coupon EC is detected in this embodiment independently from the point of sale POS by the electronic coupon server 6. Consequently, the electronic coupon server 6 can distinguish between valid and invalid redemptions of electronic coupons ECs on the basis of a distance to a point of sale POS and the exact time of the redemption request received by the electronic coupon server 6. Accordingly the electronic coupon server 6 is provided with a second information channel which can be used by the electronic coupon server 6 itself or by clearing house for clearing the data.

If the point of sale POS has an electronic device 12 an automatic clearing code ACC is transmitted by the electronic coupon server 6 to the mobile device 2 and scanned at the point of sale POS in step S9. The scanned automatic clearing code ACC can then be forwarded to the clearing house CH or to the electronic coupon distributor EC-D for further processing.

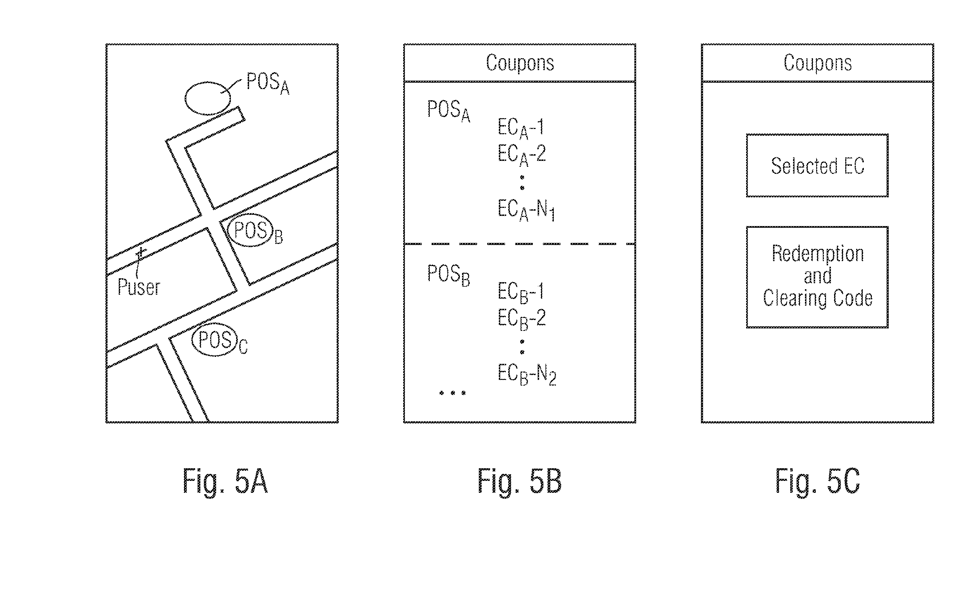

Figs. 5A, 5B, 5C show diagrams for illustrating the functionality of the system and method according to the present invention.

After having received a request to receiving electronic coupons (EC) possible point of sales (POS-A, POS-B, POS-C) in the vicinity of the user 3 are displayed for instance on a map showing the surrounding of the user. The user 3 can then select one or several point of sales POS in his vicinity to receive electronic coupons ECs of goods and services available at the respective point of sales. In the given example the user selects a first point of sale (POS-A) and a second point of sale (POS-B) to receive electronic coupons ECs for this shops. After performing a matching process taken into account for instance the locations the profiles and the coupon types the electronic coupon server 6 transmits one or several electronic coupons ECs accepted by the two selected point of sales (POS-A, POS-B) which are displayed on the display 2D of the mobile device 2 of the user 3 as shown in Fig. 5B. As can be seen from Fig. 5B the electronic coupons ECs can be displayed to the user 3 in form of a list of electronic coupons. Then the user 3 can select one or several electronic coupons ECs from the displayed list and move to the respective point of sale POS shown on the map of his display. In a possible embodiment a navigation system automatically guides the user 3 to the point of sale POS of the selected electronic coupons ECs. After having reached the point of sale POS the user 3 can send a redeem coupon request to the electronic coupon server 6 to get a clearing code CC and/or a redemption code RC. As shown in Fig. 5C the selected electronic coupon EC is displayed along with a corresponding redemption and/or clearing code on the display 2D of the mobile device 2. The clearing code CC can be an automatic clearing code ACC such as a EAN13 or GS1-128 bar code which can be scanned by a scanning device 12C at the point of sale POS. The scanned clearing code is then forwarded to the clearing house server 8 or the server 7 of the electronic coupon distributor EC-D. In an alternative embodiment the clearing code (CC) is a manual clearing code MCC which is copied on a paper or a formula to be forwarded to the clearing house CH or distributor EC-D via normal mail.

The system 1 according to the present invention can comprise further embodiments which provide for higher security. For example the data which are exchanged between the mobile device 2 and the electronic coupon server 6 can be protected by encryption techniques. Furthermore, the electronic coupon EC displayed to the user on the display can comprise hidden data allowing a verification whether the electronic coupons ECs are originating from the electronic coupon server 6 or other sources to avoid a manipulation. Accordingly, in a possible embodiment the validity of the electronic coupon EC is verified as well.

The mobile device 2 can be connected to the electronic coupon server 6 via any kind of access network such as UMTS, GPRS or WLAN. Other possibilities are also possible such as a satellite connection or a wired connection when the mobile device 2 is connected to the backbone network 5 via a cable. The backbone network 5 can be formed by the Internet. Accordingly, the mobile device 2 can also be a mobile Internet device (MID).

In a further embodiment the mobile device 2 comprises a camera which can be used to take a picture of a bar code or other identification means attached to a product offered in a shop such as a supermarket. The detected product-ID is then sent by the mobile device 2 to the electronic coupon server 6 to inquire whether electronic coupons ECs for this identified product are available or not. If such electronic coupons ECs are available the electronic coupon server 6 then transmits these electronic coupons ECs to the mobile device 2. In this embodiment the user 3 first moves to a point of sale (POS) and then selects products or services of interest to get corresponding electronic coupons ECs for the desired goods and services. In a possible embodiment the mobile device 2 can comprise an RFID reader to read out an RFID tag attached to a product for getting a product identification.

## Claims

1. A system (1) for providing at least one electronic coupon (EC) to a user (3) of a mobile device (2) for goods or services,
wherein said electronic coupon (EC) is transmitted by an electronic coupon server (6) to said mobile device (2) depending on the current position of said mobile device (2) and locations of point of sales (POS) of registered suppliers offering said goods and services,
wherein the current position of the mobile device (2) is detected by an application executed by a computation unit (2B) of said mobile device (2).

2. The system according to claim 1,
wherein a clearing code (CC) for clearing and redeeming said electronic coupon (EC) at a point of sale (POS) of a registered supplier is transmitted by said electronic coupon server (6) to said mobile device (2), wherein the mobile device (2) is in the vicinity of the point of sale (POS) of the registered supplier.

3. The system according to claims 1 or 2,
wherein a clearing code (CC) for clearing said electronic coupon (EC) and/or a redeeming code (RC) for redeeming said electronic coupon (EC) at a point of sale (POS) of a registered supplier is transmitted by said electronic coupon server (6) to the mobile device (2).

4. The system according to claim 3,
wherein said clearing code (CC) and said redeeming code (RC) is transmitted by the electronic coupon server (6) to the mobile device (2) depending on the current position of the mobile device (2) and the location of the point of sale (POS) of the registered supplier.

5. The system according to claims 1 to 4,
wherein the electronic coupon server (6) has access to an electronic coupon database (9) storing electronic coupons (EC) and to a point of sale database (10) storing locations of point of sales (POS) of registered suppliers offering goods or services to users.

6. The system according to claim 4,
wherein said clearing code (CC) comprises a clearing code for automatic clearing (ACC) and/or a clearing code for manual clearing (MCC).

7. The system according to claim 6,
wherein said clearing code (CC) is forwarded by the registered supplier (POS) to a server (7) of an electronic coupon distributor or to a server (8) of a clearing house (CH), which perform a clearing on the basis of the received clearing codes (CC) and a list of distributed and redeemed electronic coupons (ECs) provided by the electronic coupon server (6).

8. The system according to claim 5,
wherein the point of sale database (10) indicates a clearing type of the point of sale (POS) of the registered supplier, wherein said clearing type comprises an automatic clearing type and a manual clearing type.

9. A mobile device (2) of a user (3) comprising
an interface (2A) for receiving at least one electronic coupon (EC) for goods or services from an electronic coupon server (6) depending on a current position of said mobile device (2) detected by a detection unit of said mobile device (2) and depending on locations of point of sales (POS) of registered suppliers offering the goods and services.

10. The mobile device according to claim 9,
wherein the mobile device (2) further receives a clearing code (CC) from said electronic coupon server (6) for redeeming and/or clearing the received electronic coupon (EC).

11. The mobile device according to claim 10,
wherein the mobile device (2) receives the clearing code (CC) from the electronic coupon server (6) if the current position of the mobile device (2) matches the location of a point of sale (POS) of a registered supplier.

12. The mobile device according to claims 9 to 11,
wherein said mobile device (2) further comprises
a display (2D) for displaying the electronic coupon (EC) and a location of at least one point of sale (POS) of a registered supplier where the respective electronic coupon (EC) can be redeemed by the user (3) of the mobile device (2) and for displaying a calculated travel route to the respective point of sale (POS).

13. The mobile device according to claims 9 to 12,
wherein the mobile device (2) is a mobile phone which is connected to a base station (4A) of a wireless access network (4) via a wireless link, said access network (4) being connected to a backbone network (5) to which the electronic coupon server (6) is connected.

14. A method for distributing and clearing of electronic coupons (EC) for goods and services provided by an electronic coupon distributor (EC-D) comprising the steps of:
(a) transmitting to a mobile device (2) of a user (3) at least one electronic coupon (EC) depending on a detected current position of the mobile device (2) and locations of point of sales (POS) of registered suppliers offering goods and services;
(b) transmitting a redemption code (RC) to the mobile device (2) of the user (3) for redeeming the respective electronic coupon (EC) a the respective point of sale (POS) of the registered supplier and
(c) transmitting a clearing code (CC) for performing a clearing of the redeemed electronic coupon (EC) by the electronic coupon distributor (EC-D) or by a clearing house (CH) of the electronic coupon distributor (EC-D).

15. The method according to claim 14,
wherein the redemption code (RC) and the clearing code (CC) are formed by the same code, said code comprising a manual clearing code (MCC) or an automatic clearing code (ACC).
